# EUROPEAN PATENT APPLICATION

(11) **EP 4 847 920 A1**
(43) Date of publication of application: **02.12.2026**
(21) Application number: 24920097.3
(22) Date of filing: 27.12.2024
(51) Int. Cl.: G01N 35/00

(54) **AUTOMATIC ANALYSIS DEVICE AND ANALYSIS METHOD FOR AUTOMATIC ANALYSIS DEVICE**

(30) Priority: 23.01.2024 JP 2024007711
(71) Applicant: Hitachi High-Tech Corporation, Minato-ku Tokyo 105-6409 (JP)
(72) Inventor: KARAKI Yukine, Tokyo 105-6409 (JP); ARITA Shohei, Tokyo 105-6409 (JP); MATSUOKA Yuya, Tokyo 105-6409 (JP); UMEKI Hiroya, Tokyo 105-6409 (JP)
(74) Representative: MERH-IP Matias Erny Reichl Hoffmann Patentanwälte PartG mbB
(86) International application number: PCT/JP2024/046393
(87) International publication number: WO 2025/158874

(57) **Abstract**

[Problem]

To provide an automatic analyzer that uses a tube pump as a reagent supply mechanism, to maintain low cost and constant discharge accuracy, and an analysis method of the automatic analyzer.

[Solution]

An automatic analyzer includes: a storage unit that stores a relationship between a remaining amount of liquid in a container and number of rotational drive steps of a stepping motor for rotationally driving a tube pump so that the liquid in the container reaches a predetermined amount, for each amount of liquid transferred; a determination unit that determines an amount of liquid to be transferred to the container in a next analysis cycle, on the basis of the remaining amount of liquid used in a previous analysis cycle in the container as measured by a measurement mechanism; and a control unit that controls rotational driving of the stepping motor to transfer the liquid to be used in the next analysis cycle to the container, on the basis of a relationship between the amount of liquid to be transferred to the container as determined by the determination unit, the remaining amount of liquid in the container as stored in the storage unit, and the number of rotational drive steps of the stepping motor for rotationally driving the tube pump.

## Description

### Technical Field

The invention relates to an automatic analyzer and an analysis method of the automatic analyzer.

### Background Art

A simple and inexpensive tube pump has been known as reagent supply means for the automatic analyzer.

The tube pump, typically called roller pump or peristaltic pump, is made through the process of crushing a tube with a roller, and moving the roller over the tube to be squeezed for feeding liquid in the tube. After the roller has moved away, the squeezed tube restores to its original shape by the restoring force. Utilizing the negative pressure generated in the tube upon such restoration, the liquid is aspirated. The operation is performed consecutively to feed the liquid sequentially (see Patent Literature 1).

### Citation List

### Patent Literature

Patent Literature 1: Japanese Unexamined Patent Application Publication No. Hei 9(1997)-297122

### Summary of Invention

### Technical Problem

The tube pump is more cost-effective and more space-saving than the syringe pump, but exhibits dispensing accuracy lower than that of the generally employed syringe pump owing to pulsation and air entrainment as a result of squeezing the tube with the roller for liquid feeding, tube-to-tube variation, and deformation of the tube over time. In order to keep the dispensing accuracy, it is necessary to appropriately set the rotational speed and amount of rotation of the roller. For example, the rotational speed of the roller lower than the optimal range generates the pulsating flow rather than the steady flow. This may make the flow rate unstable. Meanwhile, the excessively high rotational speed may accelerate wear and deformation of the tube to undermine the long-term stability.

An object of the present invention is to provide an automatic analyzer that uses the tube pump as a reagent supply mechanism, to maintain low cost and constant discharge accuracy, and an analysis method of the automatic analyzer.

### Solution to Problem

The following describes the structure of the present invention to attain the above-described object. An automatic analyzer is provided with a measurement mechanism that measures a remaining amount of liquid in a container that retains liquid for use in sample analysis, a tube pump that transfers the liquid to the container, and a stepping motor that rotationally drives the tube pump at a predetermined steady rotational speed. The automatic analyzer includes a storage unit that stores a relationship between the remaining amount of liquid in the container and number of rotational drive steps of the stepping motor for rotationally driving the tube pump so that the liquid in the container reaches a predetermined amount, for each amount of liquid transferred, a determination unit that determines an amount of liquid to be transferred to the container in a next analysis cycle, on the basis of the remaining amount of liquid used in a previous analysis cycle in the container as measured by the measurement mechanism, and a control unit that controls rotational driving of the stepping motor to transfer the liquid to be used in the next analysis cycle to the container, on the basis of a relationship among the amount of liquid to be transferred to the container as determined by the determination unit, the remaining amount of liquid in the container as stored in the storage unit, and the number of rotational drive steps of the stepping motor for rotationally driving the tube pump so that the liquid in the container reaches the predetermined amount. The present invention further provides an analysis method of the automatic analyzer. Advantageous Effects of Invention

According to the present invention, an automatic analyzer can be provided that uses the tube pump as a reagent supply mechanism, to maintain low cost and constant discharge accuracy, and an analysis method of the automatic analyzer.

### Brief Description of Drawings

FIG. 1 is a schematic configuration diagram of an automatic analyzer.
FIG. 2 is a schematic configuration diagram illustrating an example of a reservoir mechanism of the automatic analyzer and its surrounding configuration.
FIG. 3 illustrates an example of the configuration of a control device for determining processing of the supply of a first liquid and a second liquid.
FIG. 4 is a flowchart illustrating an example of a method for determining the type of liquid and analysis cycle, calculation formula, specified range, and liquid supply amount in liquid supply.
FIG. 5 is a graph showing an example of changes in the actual number of steps in the supply of the first liquid and the second liquid.

### Description of Embodiments

An embodiment of the present invention is described using the drawings. In the respective drawings, common or similar components are denoted by the same reference numerals, and redundant explanations are skipped where appropriate. Unless otherwise stated or inherently necessary, it is clear that the components (including elemental steps) described in the following embodiment are not necessarily required.

### First Embodiment

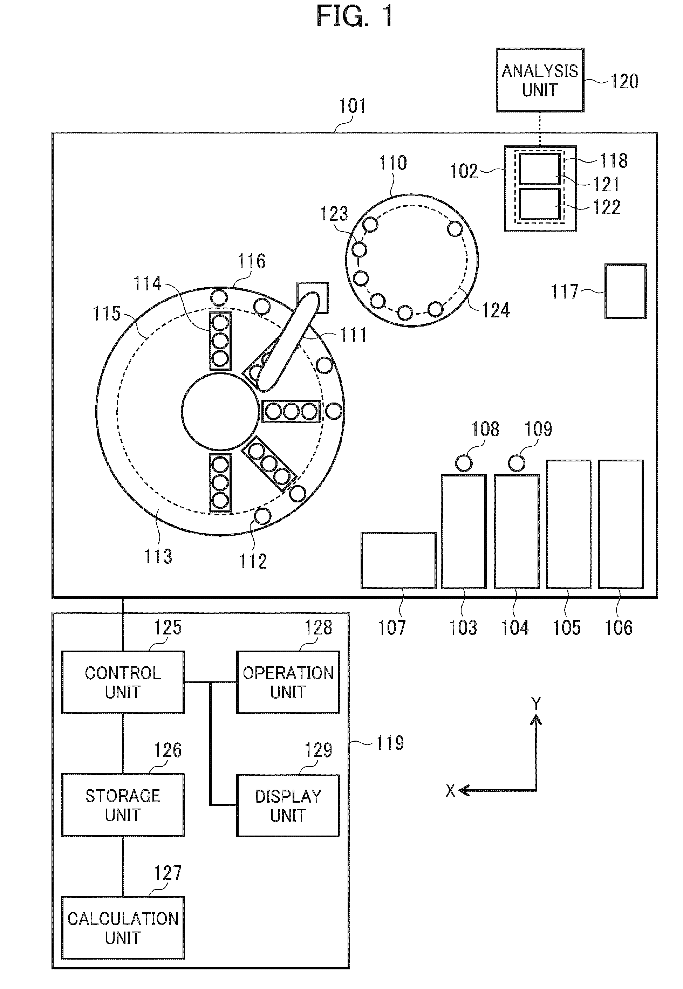

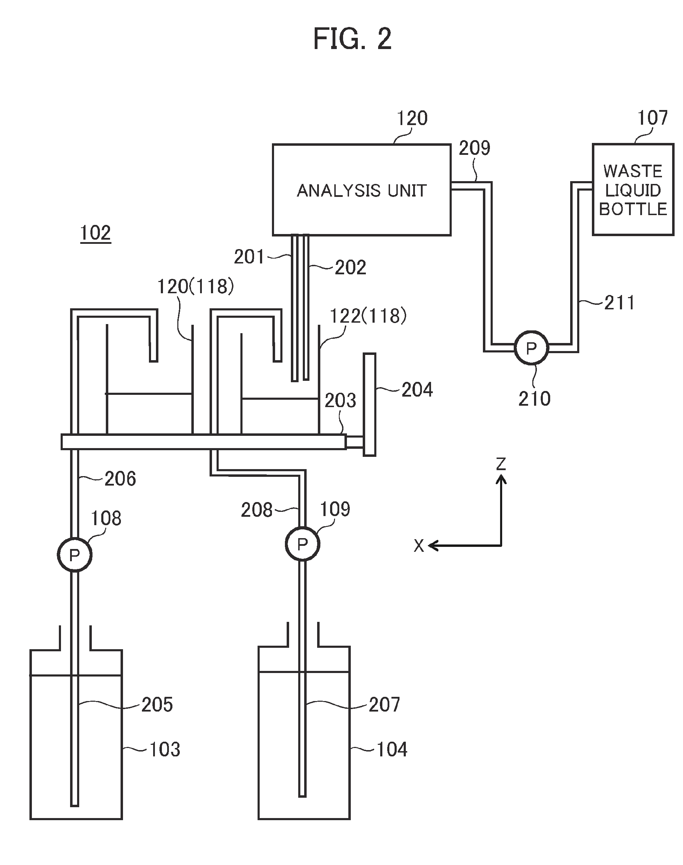

The following describes main configuration of the automatic analyzer. FIG. 1 is a schematic configuration diagram of an automatic analyzer 101 as a top view. The automatic analyzer 101 includes a reservoir mechanism 102, a first liquid bottle 103, a second liquid bottle 104, a detergent bottle 105, a pure water bottle 106, a waste liquid bottle 107, a first liquid feeding pump (tube pump) 108, a second liquid feeding pump (tube pump) 109, an incubator (reaction disk) 110, a dispensing unit 111, a sample container 112 for storing a sample, a sample holding unit (sample disk) 113 for holding the sample container 112, a reagent container 114 for storing the reagent, a reagent holding unit (reagent disk) 115 for holding the reagent container 114, a sample/reagent shared disk 116 with the sample disk 113 and the reagent disk 115, a transport unit 117, a reservoir 118, and a control device 119 for controlling overall operations of the automatic analyzer 101. An analysis unit 120 is provided above the reservoir mechanism 102. The reservoir 118 includes a first liquid reservoir 121 and a second liquid reservoir 122 in a front-to-rear arrangement (to be described later in detail using FIG. 2).

The incubator 110 includes a reaction vessel holding unit 124 for holding a plurality of reaction vessels 123 each for a sample-reagent reaction. The reaction vessel holding unit 124 is composed of a plurality of holes formed in the disk for holding the reaction vessels 123. The dispensing unit 111 dispenses the sample from the sample container 112 to the reaction vessel 123 stored in the incubator 110 by a drive mechanism such as a rotational drive mechanism and a vertical drive mechanism. Similarly, the dispensing unit 111 dispenses the reagent from the reagent container 114 to the reaction vessel 123 stored in the incubator 110 by a drive mechanism (not shown) such as a rotational drive mechanism and a vertical drive mechanism.

The transport unit 117 transports the reaction vessel 123 that stores the reaction liquid subjected to reaction for a predetermined period of time on the incubator 110 to the reservoir mechanism 102. The analysis unit 120 is a detection mechanism for immunological examinations, and provided with, for example, a photomultiplier, a light source lamp, a spectrometer, a photodiode, and the like (all of which are not shown). The analysis unit has a function of adjusting temperatures of those detection mechanisms. The analysis unit 120 performs optical measurement with respect to the reaction liquid in the reaction vessel 123 during immunological analysis. Electrochemiluminescence and chemiluminescence may be employed for the method of detecting labeled substances in immunological examinations, for example. The first liquid, labeled substance, structure of the detection region, and property are respectively selected in accordance with the respective methods. The analysis unit 120 measures an emission amount derived from the emission reaction of the labeled substance using the photomultiplier as a detector.

The control device 119 includes a control unit 125, a storage unit 126, a calculation unit 127, an operation unit 128, and a display unit 129. The control device 119 controls each processing relating to the automatic analyzer 101, for example, the processing relating to dispensing or the like of samples and reagents, the processing of temperature control or the like in the incubator 110, the processing relating to the reservoir mechanism 102, and the processing relating to maintenance of the first liquid feeding pump 108 and the second liquid feeding pump 109. The control device 119 composed of a processor and the like performs the processing operations as described above by executing the control program read from the storage unit 126. The storage unit 126 also includes a nonvolatile memory, and stores operation programs and setting information of the automatic analyzer 101, and results of calculation by the control unit 125, and the like. The storage unit 126 stores determination conditions relating to the maintenance of the first liquid feeding pump 108 and the second liquid feeding pump 109. The control unit 125 is structurally allowed to communicate with the analysis unit 120.

FIG. 2 is a schematic configuration diagram illustrating an example of the reservoir mechanism 102 of the automatic analyzer, the analysis unit 120 and its surrounding configuration. The reservoir mechanism 102 includes a liquid level detection sensor (hereinafter referred to as a sensor) 201, an aspiration nozzle 202, the reservoir 118 to which the liquid is fed, an operation stage (mounting portion) 203, an operation mechanism 204, and the like. In FIG. 1, the reservoir 118 is composed of the first liquid reservoir 121 located in the front for storing the first liquid, and the second liquid reservoir 122 located in the back for storing the second liquid. The first liquid bottle 103 is filled with the first liquid for detecting components of the sample. The second liquid bottle 104 is filled with the second liquid for cleaning. The first liquid fed from the first liquid bottle 103 by the first liquid feeding pump 108 is supplied to the first liquid reservoir 121 through a first flow channel 205 and a second flow channel 206. In this embodiment, the term "supply" is used for clarity. Meanwhile, in claims, the term "liquid feeding" is denoted. This is because the use of the term "supply" is thought to cause the risk of limited interpretation of the purpose. The second liquid fed from the second liquid bottle 104 by the second liquid feeding pump 109 is supplied to the second liquid reservoir 122 through a third flow channel 207 and a fourth flow channel 408.

A dispensing pump (not shown) connected to the dispensing unit 111 is required to exhibit high dispensing accuracy. Meanwhile, the first liquid feeding pump 108 and the second liquid feeding pump 109 for replenishment are not required to exhibit the accuracy as high as that of the dispensing pump. Accordingly, the low-cost and low-maintenance tube pump is used for the first liquid feeding pump 108 and the second liquid feeding pump 109.

The tube pump is made through the process of crushing the tube with roller, and driving the roller to squeeze the tube for feeding the liquid in the tube. The tube pump includes a plurality of rollers on an outer circumference of a rotary portion. The tube is routed over the rollers while being in contact therewith so that the tube can be crushed with the roller. After the plurality of rollers are rotationally driven, the crushed tube restores to its original shape by restoring force of its own. At the moment, the negative pressure is generated in the tube to aspirate the liquid. The operations are performed consecutively to feed the liquid sequentially.

The tube pump has two types including the one using a DC motor, and the other one using the stepping motor. In the case of using the DC motor, the tube pump is driven by the DC motor to control the current by the applied voltage for controlling the number of rotations and rotational speed. In the case of using the stepping motor, the tube pump is driven by the stepping motor to control the number of rotations of the roller based on the number of steps, and the rotational speed based on the step rate. This embodiment is described with respect to the use of the tube pump provided with the stepping motor.

The reservoir 118 to which liquid is supplied is mounted on the operation stage 203. The operation mechanism 204 drives the operation stage 203 and the reservoir 118 in horizontal and vertical directions by the vertical drive mechanism.

The liquid level detection sensor 201 is a sensor for detecting the surface of the liquid supplied into the reservoir 118. The aspiration nozzle 202 is a nozzle for removing the liquid remaining in the reservoir 118 by aspiration. Each of the liquid level detection sensor 201 and the aspiration nozzle 202 is formed into a rod-like shape, and vertically extends from above the reservoir 118, for example. The respective one ends of the liquid level detection sensor 201 and the aspiration nozzle 202 are connected and fixed to the analysis unit 120 while hanging down therefrom. The operation mechanism 204 drives the reservoir 118 together with the operation stage 203 in the vertical direction. When the surface of the liquid in the reservoir 118 contacts the other lower end of the liquid level detection sensor 201, the liquid surface is detected. Upon detection of the liquid surface, the liquid level detection sensor 201 outputs a liquid surface detection signal. The output liquid surface detection signal is transmitted from the analysis unit 120 to the control unit 125. The amount of liquid remaining in the reservoir 118 is calculated from the drive amount of the operation mechanism 204 that has been driven until detection of the liquid surface.

The aspiration nozzle 202 is connected to a pump 210 through a fifth flow channel 209. The pump 210 is driven to allow the aspiration nozzle 202 to aspirate the liquid in the reservoir 118. The liquid aspirated by the aspiration nozzle 202 is fed to the outside of the reservoir mechanism 102 by the driven pump 210 through the fifth flow channel 209 and a sixth flow channel 211. The liquid is then discharged to the waste liquid bottle 107.

The analysis unit 120 includes a basic circuit for the liquid surface detection. In this case, a liquid level detection unit 301 controls liquid surface detection processing. The analysis unit 120 connected to the control unit 125 as illustrated in FIG. 1 transmits liquid surface detection results relating to the liquid surface detection process to the control device 119. Alternatively, the analysis unit 120 may be a function block of performing the process relating to detection of the liquid surface in the reservoir 118.

In this case, the analysis unit 120 includes a processor, a memory, and the like, for example. The processor executes the program stored in the memory to perform the process relating to the liquid surface detection.

In the following description, the first liquid feeding pump 108 and the second liquid feeding pump 109 may be referred to as tube pumps 212.

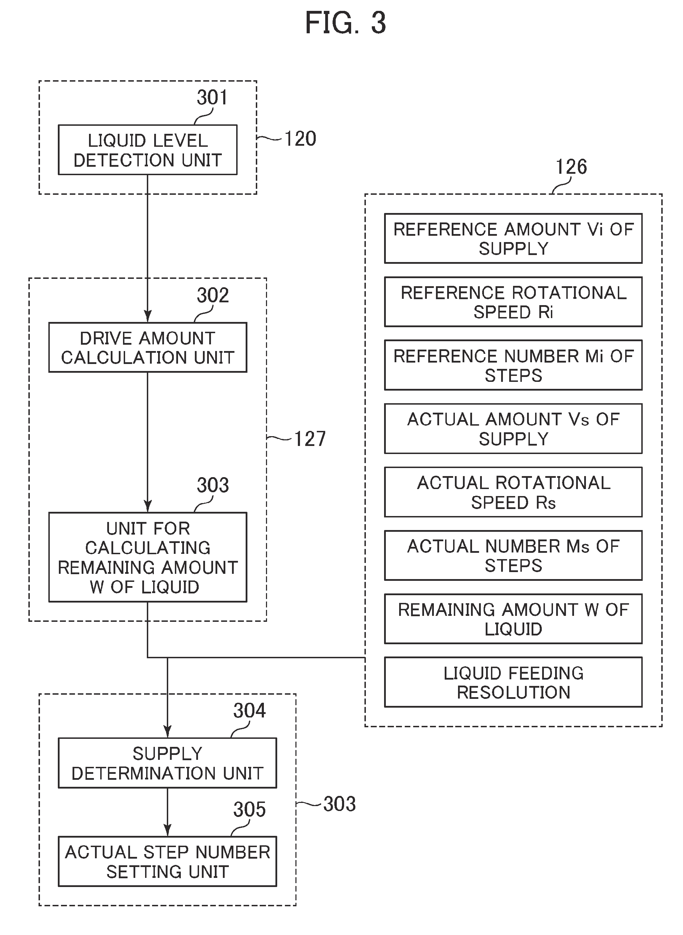

FIG. 3 illustrates an example of the configuration of the control device 119 for determining processing of the supply of the first liquid and the second liquid and its surrounding configuration.

The storage unit 126 stores a reference supply amount Vi (µl), a reference rotational speed Ri, a reference number of steps Mi (step), an actual supply amount Vs (µl), an actual rotational speed Rs, an actual number of steps Ms (step), a remaining liquid amount W (µl), a liquid feeding resolution (µl/step), and the like. Those values are used for performing the process of calculating supply amounts of the first liquid and the second liquid, and the process of confirming the remaining liquid amount. The reference supply amount Vi denotes a design value of reagent consumption in each analysis cycle. The reference rotational speed Ri denotes a value obtained by converting the reference supply amount Vi into the number of rotations of the roller. The reference number of steps Mi denotes a value obtained by converting the reference rotational speed Ri into the number of motor steps. The actual supply amount Vs denotes an amount of reagent supplied for the next analysis cycle, which has been calculated based on the reference supply amount Vi, the remaining liquid amount W, and the liquid feeding resolution. The actual rotational speed Rs denotes a value obtained by converting the actual supply amount Vs into the number of rotations of the roller. The actual number of steps Ms denotes a value obtained by converting the actual rotational speed Rs into the number of motor steps. As described above, a calculation formula to be used for calculating the actual supply amount Vs is selectable in accordance with the reagent type and the cycle type to be performed in the next analysis cycle. Similarly, the specified range to be used in the process of confirming the remaining liquid amount W is selectable in accordance with the reagent type and the cycle type.

The liquid level detection unit 301 is a function block of detecting the liquid surface in the reservoir 118 in collaboration with the liquid level detection sensor 201, and disposed in the analysis unit 120.

The calculation unit 127 includes a drive amount calculation unit 302 for calculating a vertical driving amount of the operation mechanism 204, a remaining liquid amount calculation unit 303, a determination unit 304, an actual step number setting unit 305, and the like.

The drive amount calculation unit 302 is a function block of calculating the vertical driving amount of the operation mechanism 204.

The remaining liquid amount calculation unit 303 is a function block of calculating each liquid amount of the first liquid and the second liquid remaining in the reservoir 118. The determination unit 304 is a function block of determining the need for supply and the supply amount in the next cycle from remaining liquid amounts of the first liquid and the second liquid, which have been calculated by the remaining liquid amount calculation unit 303.

The actual step number setting unit 305 is a function block of setting the step for driving the tube pump 212 from the supply amount determined by the determination unit 304.

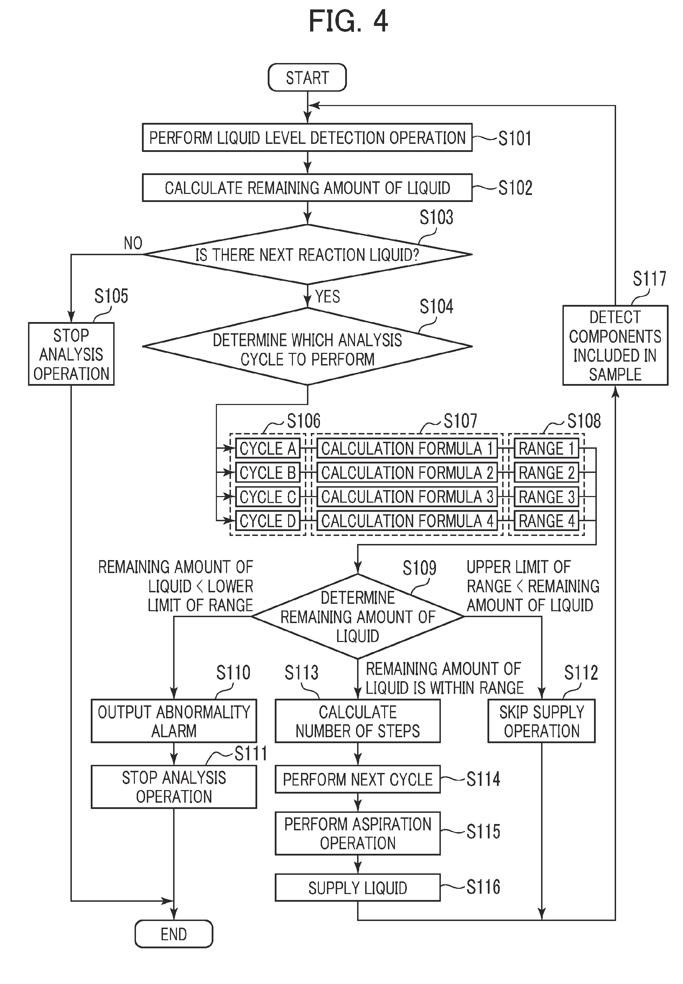

FIG. 4 is a flowchart illustrating an example of a method for determining the type of liquid and analysis cycle, calculation formula, specified range, and liquid supply amount in first liquid supply.

In step S101, the liquid level detection unit 301 performs the liquid level detection operation, and the process proceeds to step S102.

In step S102, the remaining liquid amount is calculated by the remaining liquid amount calculation unit 303 from the drive amount of the operation mechanism 204, which is required for moving upward until detection of the liquid level. The process then proceeds to step S103.

In step S103, it is determined with respect to existence of the reaction liquid to be used next in the reaction vessel 123. If it is determined that the reaction liquid exists (Yes), the first liquid is selected. The process then proceeds to step S104. If it is determined that no reaction liquid exists (No), the process proceeds to step S105 in which the analysis operation is stopped to end the process.

In steps S104 and S106, the determination is made with respect to the analysis cycle to be performed. In steps S107 and S108, the calculation formula and the specified range corresponding to the determined analysis cycle are specified. The process proceeds to step S109. The user is allowed to freely add the analysis cycle, the calculation formula, and the specified range.

In step S109, the determination unit 304 determines with respect to the remaining liquid amount in the reservoir 118. If it is determined that the remaining liquid amount is below the lower limit of the range specified in step S108, the process proceeds to step S110 in which a notification mechanism outputs (notifies) an abnormality alarm, and in step S111, the analysis operation is stopped to end the process. If it is determined that the remaining liquid amount exceeds the upper limit of the range, the process proceeds to step S112. In step S112, the supply operation is skipped. If it is determined that the remaining liquid amount is within the range, the process proceeds to step S113.

In step S113, based on the remaining liquid amount as determined by the determination unit 304, the actual step number setting unit 305 sets the actual number of steps of the motor in the tube pump 212 during supply operations. The process then proceeds to step S114.

In step S114, the next cycle is performed, and the process proceeds to step S115.

In step S115, the liquid selected in step S103 is aspirated, and the process proceeds to step S116.

In step S116, based on the actual number of steps set by the actual step number setting unit 305, the motor in the tube pump 212 is driven to supply the first liquid. After the liquid supply, the process proceeds to step S117. Even after skipping the supply operation in step S112, the process proceeds to step S117.

In step S117, after using the first liquid for detecting components of the sample, operations in step S101 and subsequent steps are performed repeatedly.

Similarly, the determination is made with respect to the liquid type, the analysis cycle type, calculation formula, specified range, and liquid supply amount of the second liquid in accordance with the flowchart of FIG. 4. As for the second liquid, in steps S106, S107, and S108, there are analysis cycles, calculation formulae, and specified ranges are different from those of the first liquid. The second liquid is used for cleaning in step S117.

In the present embodiment, based on the amount of liquid remaining in the reservoir 118 (hereinafter referred to as the remaining liquid amount), the liquid supply amount in the next analysis cycle is calculated. Based on the liquid supply amount and the liquid feeding resolution (liquid supply amount for each step operation of the stepping motor), the number of rotations of the roller, that is, the number of steps for operating the motor is calculated.

In this case, the rotational speed of the roller, that is, the step rate of the motor is kept constant irrespective of the liquid supply amount. The process for calculating the liquid supply amount and the number of motor steps is performed at each end of the analysis cycle. The process makes it possible to supply the reagent by the amount equivalent to the consumption in the preceding analysis cycle. The rotational speed of the roller is kept constant to mitigate potential issues in the tube pump, for example, liquid level instability caused by pulsation, wear and deterioration in the tube. This makes it possible to stable supply of reagent for a long period of time.

Information relating to the remaining liquid amount is used as an index for confirming whether the consumption or supply amount of the reagent is appropriate. For example, if the remaining liquid amount is out of the specified range determined on the device (either excess or below), there may be the suspected defect relating to consumption and supply of the reagent. An abnormality alarm is then output to stop the analysis operation. In this case, the device does not have to be stopped. For example, if the remaining liquid amount exceeds the specified range, that is, sufficient amount of the reagent remains in the reservoir 118, the reagent supply process can be skipped in the next analysis cycle. If the remaining liquid amount is below the specified range, that is, the reagent is not remaining in the reservoir 118, the reagent supply process is performed a plurality of times rather than performed only once in the next cycle.

Table 1 shows the correlation among the type of the reagent to be supplied, the type of cycle to be performed in the next analysis cycle, the calculation formula to be used for calculating the reagent supply amount, and the specified range to be used for the process of confirming the remaining liquid amount.

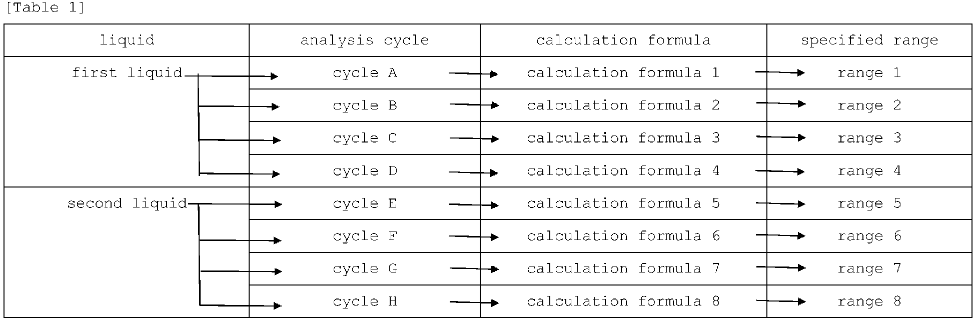

The calculation process of the liquid supply amount and the confirmation process of the remaining liquid amount are performed for the first liquid and the second liquid, respectively. The calculation formula used in the supply amount calculation process is selectable in accordance with the reagent type (the first liquid or the second liquid) and the cycle type to be performed in the next analysis cycle. The specified range to be used in the process of confirming the remaining liquid amount is also selectable in accordance with the reagent type and the cycle type. Each of the calculation formula and the range may include one type, or two or more types.

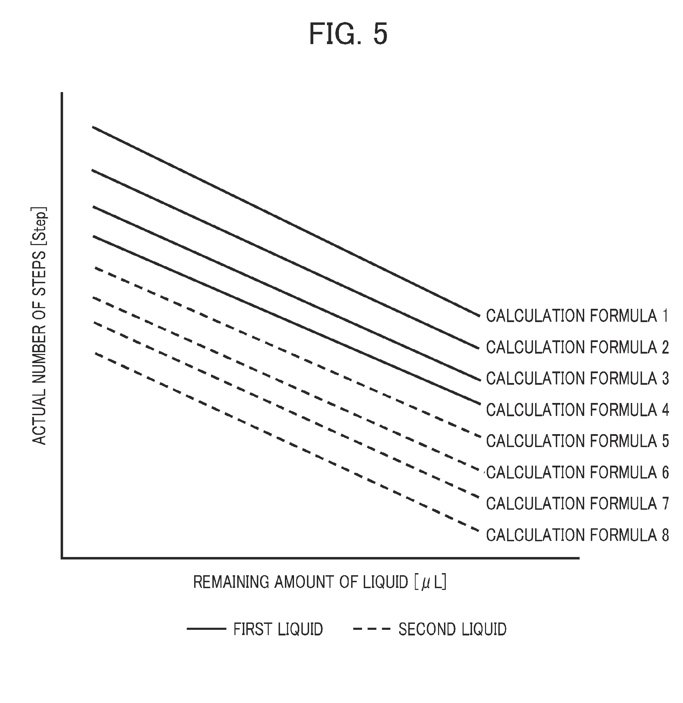

FIG. 5 shows each relationship between the supply amount (liquid feeding amount) derived from the calculation formula and the actual number of steps for rotationally driving the stepping motor. The drawing shows the remaining amount of each liquid in the reservoir 118, which has been calculated by the remaining liquid amount calculation unit 303. In this case, the supply amount (liquid feeding amount) is expressed by the equation: supply amount (liquid feeding amount) = liquid amount expected to be stored in the container - remaining liquid amount. A vertical axis represents the actual number of steps required for supplying the respective liquids, which has been set by the actual step number setting unit 305 based on the remaining liquid amount. Solid lines and dotted lines denote examples of each change in the actual number of steps for the first liquid (mainly, reagent) and the second liquid (liquid such as detergent for cleaning the liquid feeding unit such as the aspiration nozzle 202, and the analysis unit), respectively. As illustrated in FIG. 5, a linear equation is used to express the relationship with the number of rotational drive steps of the stepping motor that rotationally drives the tube pump so that the liquid in the reservoir 118 reaches the predetermined amount: $y = ax + b$
y: Number of rotational drive steps of the stepping motor
x: Remaining amount of liquid in the container
a: Coefficient determined from tube pump specifications or the like
b: Constant determined by the amount of liquid transferred.
The usage amount of the reagent for sample analysis (corresponding to the first liquid in FIG. 5, and "liquid" denoted in claims) is preliminarily determined for each of the analysis items. In other words, as the transfer amount is predetermined, it is associated with one of the calculation formulae from 1 to 4 for each of the analysis items (for each reagent). As the number of reagent types increases, the associated calculation formulae increase accordingly.

The second liquid is mainly assumed to be a detergent, and is associated with one of the calculation formulae from 5 to 8 in accordance with the liquid feeding amount.

The liquid level detection sensor 201 (in claims, denoted as "measurement mechanism") measures the remaining liquid amount in the reservoir 118 (in claims, denoted as "container") to which the liquid is fed. A liquid storage amount of the reservoir 118 upon storage of the liquid is preliminarily determined. For example, the liquid storage amount is determined as the one filled at the level up to a line 1 cm below the top end of a reservoir tank. Then, an amount of liquid to be fed to the liquid reservoir tank can be calculated based on the difference between the amount corresponding to the liquid surface measured by the liquid level detection sensor 201 and the liquid storage amount upon storage of the predetermined amount of liquid.

Meanwhile, the storage unit stores correlations of each liquid feeding amount (transfer amount) with the number of rotational drive steps of the stepping motor for rotationally driving the tube pump to allow the amount of liquid in the reservoir 118 to reach the predetermined value. The calculated liquid feeding amount that matches the amount of liquid to be fed to the liquid reservoir tank is extracted from the storage unit. The determination unit determines the number of rotational drive steps of the stepping motor for rotationally driving the tube pump, corresponding to the extracted liquid feeding amount. The stepping motor is rotated by the determined number of rotational drive steps of the stepping motor to transfer the liquid to be used in the next analysis cycle to the container.

As has been already described, the dispensing amount of the tube pump for each feeding may become unstable owing to pulsation and air entrainment. The dispensing accuracy may also vary over time owing to tube-to-tube variations, and deformation of the tube over time. Meanwhile, preferably, the reservoir 118 contains a predetermined amount of liquid just before feeding the liquid from the reservoir tank. In the present embodiment, after feeding the liquid from the reservoir tank, the remaining amount of the liquid therein is measured after every measurement. Based on the measured amount of the remaining liquid, the liquid feeding amount for filling the reservoir tank with the predetermined amount of liquid is calculated so that the reservoir tank is filled with the predetermined liquid amount in the next analysis cycle. This allows compensation for the liquid feeding accuracy of the tube pump.

Under the control for supplying each liquid by the tube pump, change in the rotational speed of the motor in the pump may bring the liquid feeding amount unstable. As a result, wear is increased to accelerate deterioration of the tube, which may cause the risk of lowering the dispensing accuracy during each liquid supply. In order to ensure appropriate reagent supply consistently, the liquid feeding amount has to be controlled by keeping the rotational speed of the motor constant.

As FIG. 5 shows, in the present embodiment, the following operations are performed while keeping the motor rotational speed of the tube pump 212 constant. That is, based on the liquid level just after the liquid supply in the preceding cycle, the need of each liquid supply and supply amount in the next cycle is determined, the increase/decrease in the number of rotations of the motor is corrected, and converted into the actual number of steps for setting. This makes it possible to implement variable supply adapted to every remaining liquid amount to attain efficient liquid supply without excess nor deficiency even after going through the cycle.

### List of Reference Signs

- 101: automatic analyzer
- 102: reservoir mechanism
- 103: first liquid bottle
- 104: second liquid bottle
- 105: detergent bottle
- 106: pure water bottle
- 107: waste liquid bottle
- 108: first liquid feeding pump (tube pump)
- 109: second liquid feeding pump (tube pump)
- 110: incubator (reaction disk)
- 111: dispensing unit
- 112: sample container
- 113: sample holding unit (sample disk)
- 114: reagent container
- 115: reagent holding unit (reagent disk)
- 116: sample/reagent shared disk
- 117: transport unit
- 118: reservoir
- 119: control device
- 120: analysis unit
- 121: first liquid reservoir
- 122: second liquid reservoir
- 123: reaction vessel
- 124: reaction vessel holding unit
- 125: control unit
- 126: storage unit
- 127: calculation unit
- 128: operation unit
- 129: display unit
- 201: liquid level detection sensor
- 202: aspiration nozzle
- 203: operation stage (mounting portion)
- 204: operation mechanism
- 205: first flow channel
- 206: second flow channel
- 207: third flow channel
- 208: fourth flow channel
- 209: fifth flow channel
- 210: pump
- 211: sixth flow channel
- 212: tube pump
- 301: liquid level detection unit
- 302: drive amount calculation unit
- 303: remaining liquid amount calculation unit
- 304: determining unit
- 305: actual step number setting unit

## Claims

1. An automatic analyzer comprising:
a measurement mechanism that measures a remaining amount of liquid in a container that retains liquid for use in sample analysis;
a tube pump that transfers the liquid to the container; and
a stepping motor that rotationally drives the tube pump at a predetermined steady rotational speed, the automatic analyzer including:
a storage unit that stores a relationship between the remaining amount of liquid in the container and number of rotational drive steps of the stepping motor for rotationally driving the tube pump so that the liquid in the container reaches a predetermined amount, for each amount of liquid transferred;
a determination unit that determines an amount of liquid to be transferred to the container in a next analysis cycle, on the basis of the remaining amount of liquid used in a previous analysis cycle in the container as measured by the measurement mechanism; and
a control unit that controls rotational driving of the stepping motor to transfer the liquid to be used in the next analysis cycle to the container, on the basis of a relationship between the amount of liquid to be transferred to the container as determined by the determination unit, the remaining amount of liquid in the container as stored in the storage unit, and the number of rotational drive steps of the stepping motor for rotationally driving the tube pump so that the liquid in the container reaches the predetermined amount.

2. The automatic analyzer according to claim 1, wherein
the relationship with respect to the number of rotational drive steps of the stepping motor that rotationally drives the tube pump so that the liquid in the container reaches the predetermined amount is expressed as follows: $y = ax + b$
y: Number of rotational drive steps of the stepping motor
x: Remaining amount of liquid in the container
a: Coefficient determined from tube pump specifications or the like
b: Constant determined by the amount of liquid transferred.

3. The automatic analyzer according to claim 2, wherein
the above b is determined by analysis items of the automatic analyzer using the liquid.

4. The automatic analyzer according to claim 1, wherein
the storage unit stores a predetermined upper limit of the amount of liquid in the container,
the automatic analyzer includes a determining unit that determines whether the amount of liquid in the container as measured by the measurement mechanism exceeds the upper limit, and
if the determining unit determines that the amount of liquid in the container exceeds the upper limit, the control unit performs control to skip operation of transferring the liquid to be used in the next analysis cycle to the container.

5. The automatic analyzer according to claim 4, wherein
the storage unit stores a predetermined lower limit of the amount of liquid in the container,
the determining unit has a function of determining whether the amount of liquid in the container as measured by the measurement mechanism is below the lower limit, and
the automatic analyzer includes a notification mechanism that provides notification if the determining unit determines that the amount of liquid in the container is below the lower limit.

6. The automatic analyzer according to claim 2, wherein
the liquid is classified as a first liquid for detecting components contained in the sample and a second liquid for cleaning the liquid-feeding unit and/or the analysis unit,
the above equation y = ax + b is
different for the first liquid and the second liquid.

7. An analysis method of an automatic analyzer including:
a measurement mechanism that measures a remaining amount of liquid in a container that retains liquid for use in sample analysis;
a tube pump that transfers the liquid to the container; and
a stepping motor that rotationally drives the tube pump at a predetermined steady rotational speed, the analysis method comprising:
a first step of measuring, with the measurement mechanism, the remaining amount of liquid used in a previous analysis cycle in the container;
a second step of determining an amount of liquid to be transferred to the container in a next analysis cycle, on the basis of a relationship between the remaining amount of liquid used in the previous analysis cycle in the container as measured in the first step, the remaining amount of liquid in the container for each amount of liquid transferred, and number of rotational drive steps of the stepping motor for rotationally driving the tube pump so that the liquid in the container reaches a predetermined amount; and
a third step of rotationally driving the stepping motor so as to transfer the liquid to be used in the next analysis cycle to the container, on the basis of a relationship between the amount of liquid to be transferred to the container as determined in the second step, the remaining amount of liquid in the container, and the number of rotational drive steps of the stepping motor for rotationally driving the tube pump so that the liquid in the container reaches the predetermined amount.

8. The analysis method of an automatic analyzer according to claim 7, further comprising:
a determining step of determining whether the amount of liquid in the container as measured by the measurement mechanism exceeds a predetermined upper limit of the amount of liquid in the container; and
a step of skipping operation of transferring the liquid to be used in the next analysis cycle to the container if it is determined in the determining step that the amount of liquid in the container exceeds the upper limit.

9. The analysis method of an automatic analyzer according to claim 7, further comprising:
a determining step of determining whether the amount of liquid in the container as measured by the measurement mechanism is below a predetermined lower limit of the amount of liquid in the container; and
a notification step of providing notification if it is determined in the determining step that the amount of liquid in the container is below the lower limit.
